**Europäisches Patentamt**

**European Patent Office**

**Office européen des brevets**

(11) Veröffentlichungsnummer: **0 258 717**
A1

# EUROPÄISCHE PATENTANMELDUNG

(21) Anmeldenummer: 87111835.2

(22) Anmeldetag: 14.08.87

(51) Int. Cl.⁴: **H04M 1/02** , G09F 9/00

(30) Priorität: 20.08.86 DE 3628182

(43) Veröffentlichungstag der Anmeldung:
09.03.88 Patentblatt 88/10

(84) Benannte Vertragsstaaten:
AT DE FR

(71) Anmelder: **Siemens Aktiengesellschaft Berlin und München**
**Wittelsbacherplatz 2**
**D-8000 München 2(DE)**

(72) Erfinder: **Awakowicz, Erwin, Dipl.-Ing. (FH)**
**Richard-Pietzsch-Weg 18**
**D-8000 München 71(DE)**
Erfinder: **Schiller, Kurt, Ing. grad.**
**Leonhardstrasse 70**
**D-8905 Mering(DE)**

(54) **Halterung für ein Display.**

(57) Halterung (4) für ein in nachrichtentechnischen Endgeräten (2) angeordnetes Display (5). Die Halterung soll an unterschiedliche Gebrauchslagen des Endgerätes (2) anpaßbar sein. Zu diesem Zweck ist die Halterung (4) innerhalb eines Ausschnittes (3) im Endgerät (2) schwenkbar gelagert.

## FIG 3

## Halterung für ein Display

Die vorliegende Erfindung beinhaltet eine Halterung für ein in nachrichtentechnischen Endgeräten angeordnetes Display.

Optische Anzeigevorrichtungen in nachrichtentechnischen Endgeräten, z.B. Fernsprechstationen sind üblicherweise innerhalb des Gerätes bündig zur Oberfläche des Gehäuseoberteils verlaufend oder zum Benutzer geneigt angeordnet und geben eine gewählte Zeichenfolge in Form von Schriftzeichen oder Ziffern wieder. Es sind bereits Anordnungen bekannt, bei denen Mehrfachinformationen auf Anzeigevorrichtungen von Fernsprechstationen aufgezeigt werden, die wegen der Vielzahl der möglichen Informationen auf der Fernsprechstation senkrecht oder geneigt angeordnet sind. Dabei sind diese Anzeigevorrichtungen fest oder lösbar mit der Fernsprechstation verbunden.

Nachrichtentechnische Endgeräte lassen sich in unterschiedlichen Gebrauchslagen einsetzen. So kann z.B. eine Fernsprechstation als Tisch-oder Wandgerät zum Einsatz gelangen.

Aufgabe der vorliegenden Erfindung ist es daher, die Halterung für ein in nachrichtentechnischen Endgeräten verwendetes Display so anzuordnen, daß sie schnell und einfach an unterschiedliche Gebrauchslagen anpaßbar ist.

Diese Aufgabe wird dadurch gelöst, daß die Halterung innerhalb eines Ausschnittes im Endgerät schwenkbar gelagert ist.

Wird zum Beispiel ein nachrichtentechnisches Endgerät in Form einer Fernsprechstation mit etwa parallel zur Standfläche verlaufender Oberfläche des Gehäuseoberteils verwendet, so sind die auf dem Display erscheinenden Zeichen für den Benutzer in sitzender Position nicht oder nur sehr schlecht erkennbar. In diesem Fall wird die Halterung mit dem Display soweit herausgeschwenkt, daß eine gute Ablesbarkeit der Zeichen gewährleistet ist. Bei Verwendung der Fernsprechstation als Wandgerät ist jedoch die die Anzeigevorrichtung enthaltende Oberfläche dem Benutzer direkt zugewandt, so daß die Halterung soweit zurückgeklappt wird, bis sie bündig mit der Oberfläche des Gehäuseoberteils abschließt.

Dabei besteht die Möglichkeit, die Halterung für das Display lediglich in zwei Endstellungen zu verschwenken. Gemäß einer weiteren Ausgestaltung der Erfindung kann jedoch der der Lagerstelle gegenüberliegende Bereich des Halterahmens mehrere Rastausnehmungen aufweisen, in die ein an dem nachrichtentechnischen Endgerät angeordnetes Rastelement eingreift. Dadurch lassen sich auf einfache Weise unterschiedliche Neigungswinkel der Halterung zur Endgeräteoberfläche für den Benutzer einstellen. Das Rastelement kann dabei als Rastfeder ausgebildet sein, dessen eines Ende innerhalb eines Schachtes an dem Endgerät geklemmt gehalten ist, während sein anderes freies Ende den Konturen der Rastausnehmungen entsprechend abgebogen ist.

Die Lagerstelle kann vorzugsweise durch zwei an dem Halterahmen der Halterung angeordnete kurze Ansätze kreisförmigen Querschnitts und ihren Konturen entsprechenden Ausbuchtungen im Bereich der Oberfläche des Endgerätes gebildet sein.

Bei bekannten Anordnungen zur Halterung des Displays besteht die Halterung im wesentlichen aus einem Halterahmen, dem Display und das Display innerhalb der Halterung fixie renden winkelförmigen Haltebügeln, wobei ein Schenkel des jeweiligen Haltebügels innerhalb einer schachtartigen Vertiefung des Endgerätes verrastet ist und an einer Seitenwand teilweise anliegt, während der andere Schenkel vorgespannt gegen eine mit dem Display verbundene Leiterplatte drückt. Eine Fixierung des Displays und der die Anschaltelemente enthaltende Leiterplatte erfolgt dabei über innerhalb des Halterahmens angeordnete Stifte, die entsprechende Durchbrüche der Leiterplatte durchgreifen. Eine weitere Fixierung und Führung des Displays sowie deren Leiterplatte kann dadurch erfolgen, daß die Haltebügel über einen Quersteg miteinander verbunden sind und an ihren dem Display zugewandten Schenkelenden Noppen aufweisen, die in entsprechende Vertiefungen der Leiterplatte eingreifen.

Die Erfindung soll im folgenden anhand eines Ausführungsbeispiels näher erläutert werden.

Es zeigt

Fig. 1 einen Ausschnitt des Gehäuseoberteils einer Fernsprechstation mit herausgeschwenkter Halterung für ein Display

Fig. 2 die Anordnung nach Fig. 1 mit eingeschwenkter Halterung für das Display

Fig. 3 die Anordnung nach Fig. 1 in einer geschnittenen Seitenansicht

Fig. 4 die Anordnung nach Fig. 2 in einer geschnittenen Seitenansicht

Fig. 5 eine Aufsicht auf die Halterung für das Display

Fig. 6 die Lagerstelle der Anordnung.

In einem Ausschnitt 3 eines Gehäuseoberteils 1 der Fernsprechstation 2 soll die Halterung 4 für ein Display 5 schwenkbar gelagert werden.

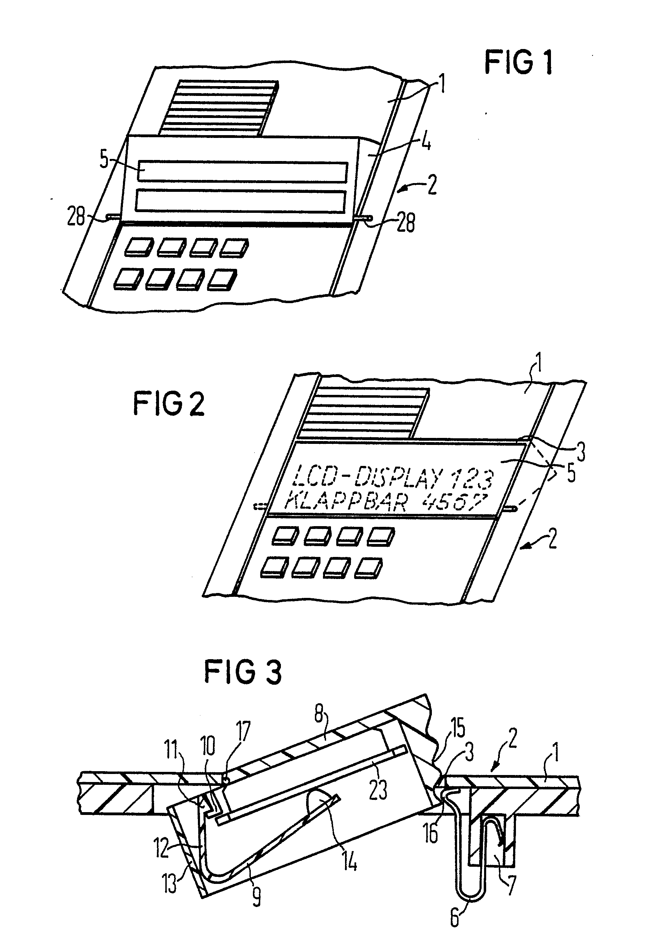

Die in Fig. 1 dargestellte herausgeschwenkte Stellung der Halterung wird vorzugsweise bei Tischgeräten gewählt, um eine bessere Ablesbarkeit der gewählten Zeichenfolge zu erzielen, während die in Fig. 2 gezeigte Lage, bei der die das Display 5 aufnehmende Halterung 4 bündig mit der Oberfläche des Gehäuseoberteils abschließt, vorzugsweise bei Wandgeräten zum Einsatz gelangen kann, da in diesem Fall die Gehäuseoberfläche direkt dem Benutzer zugewandt ist.

Bei der in Fig. 3 gezeigten herausgeschwenkten Stellung der Halterung 4 ist mit 1 das Gehäuseoberteil und mit 6 eine in einem Schacht 7 des Oberteils 1 eingebrachte Rastfeder bezeichnet. Die Halterung besteht im wesentlichen aus dem Halterahmen 8, dem Display 5 und einem Haltebügel 9. Der Halterahmen 8 besitzt einen Rastansatz 10, der von einer Gegenraste 11 an einem freien Ende des Haltebügels 9 hintergriffen wird, wobei sich der die Gegenraste aufweisende Schenkel 12 des Haltebügels 9 teilweise an einer Seitenwand 13 des Halterahmens 8 abstützt. Das andere freie Ende des Haltebügels 9 weist einen balligen Steg 14 auf, der unter Vorspannung an der Leiterplatte 23 des Displays 5 anliegt. In seinem der Rastfeder 6 zugewandten Bereich besitzt der Halterahmen 8 mehrere Rastausnehmungen 15, in die jeweils das abgebogene Ende 16 der Rastfeder eingreift. Die Lagerstelle ist dabei mit 17 bezeichnet.

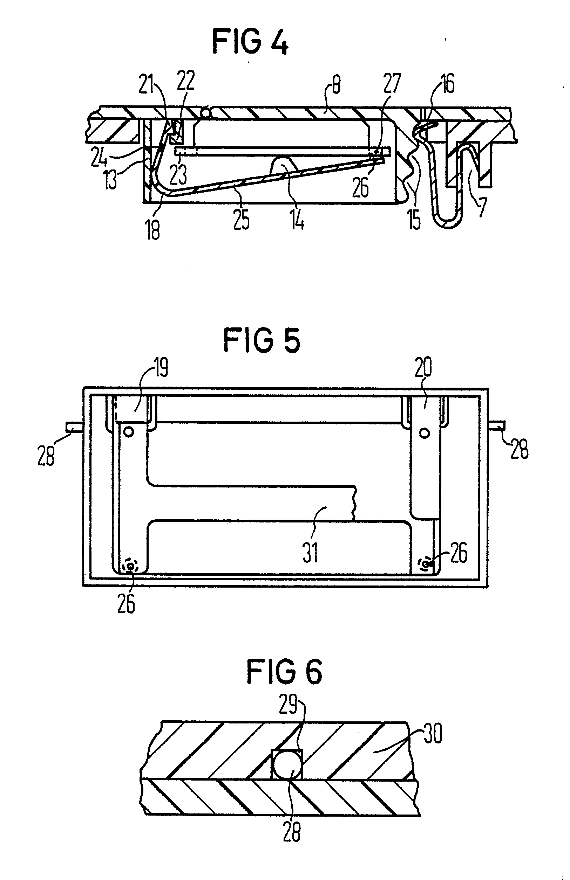

Bei der in Fig. 4 gezeigten eingeklappten Stellung der Halterung sind im wesentlichen die gleichen Teile wie bei der in Fig. 3 gezeigten Anordnung vorhanden.

Bei dieser Anordnung ist lediglich der Haltebügel anders gestaltet. Bei diesem Halteelement sind - wie deutlich aus Fig. 5 hervorgeht - die Haltebügel 18 über einen Quer steg 31 miteinander verbunden, wobei die jeweiligen Haltebügel an ihren einen freien Enden 19 und 20 die Gegenrasten 21 besitzen, die jeweils Rastansätze 22 am Halterahmen 8 hintergreifen. Während sich die die Gegenrasten besitzenden Schenkel 24 des Haltebügels an Seitenwandungen des Halterahmens teilweise abstützen, weisen die anderen Schenkel 25 neben den balligen Ansätzen 14 an ihren freien Enden Noppen 26 auf, die in entsprechende Vertiefungen 27 in der Leiterplatte 23 des Displays eingreifen. Dadurch kann eine einfache Zentrierung und Fixierung des Displays innerhalb des Halterahmens erreicht werden.

Wie aus der Fig. 5 weiterhin zu entnehmen ist, sind an dem Halterahmen zwei kurze, die Schwenkachse bildende Ansätze kreisförmigen Querschnitts angespritzt.

Die Lagerstelle selbst ist in Fig. 6 dargestellt. Die Ansätze 28 greifen dabei in eine Ausbuchtung 29 einer auf die Oberfläche des Gehäuseoberteils aufrastbaren Abdeckung ein. Es besteht aber auch die Möglichkeit, die Ausbuchtung so vorzusehen, daß sie sich teilweise in der Abdeckung 30 und der Oberfläche des Gehäuseoberteils befindet.

## Ansprüche

1. Halterung (4) für ein in nachrichtentechnischen Endgeräten (2) angeordnetes Display (5), **dadurch gekennzeichnet, daß** die Halterung (4) innerhalb eines Ausschnittes (3) im Endgerät (2) - schwenkbar gelagert ist.

2. Halterung nach Anspruch 1, **dadurch gekennzeichnet, daß** die Lagerstelle (17) durch zwei an einem Halterahmen (8) der Halterung angeordnete kurze Ansätze (28) kreisförmigen Querschnitts und ihren Konturen entsprechenden Ausbuchtungen (29) im Bereich der Oberfläche des Endgerätes (2) gebildet ist.

3. Halterung nach Anspruch 1, **dadurch gekennzeichnet, daß** der der Lagerstelle (17) gegenüberliegende Bereich des Halterahmens (8) mehrere Rastausnehmungen (15) aufweist, in die ein am nachrichtentechnischen Endgerät (2) angeordnetes Rastelement eingreift.

4. Halterung nach Anspruch 3, **dadurch gekennzeichnet, daß** das Rastelement als Rastfeder (6) ausgebildet ist, dessen eines Ende innerhalb eines Schachtes (7) an dem Endgerät (2) geklemmt gehalten ist, während sein anderes freies Ende (16) den Konturen der Rastausnehmungen (15) entsprechend abgebogen ist.

5. Halterung nach Anspruch 1, die im wesentlichen aus einem Halterahmen (8), dem Display (5) und das Display (5) innerhalb der Halterung (4) fixierenden winkelförmigen Haltebügeln (18) besteht, wobei ein Schenkel des jeweiligen Haltebügels innerhalb einer schachtartigen Vertiefung (7) des Endgerätes (2) verrastet ist und an einer Seitenwand (13) des Schachtes (7) teilweise anliegt, während der andere Schenkel vorgespannt gegen eine mit dem Display (5) verbundene Leiterplatte (23) drückt, **dadurch gekennzeichnet, daß** die Haltebügel (18) über einen Quersteg (31) miteinander verbunden sind und an ihren dem Display (5) zugewandten Schenkelenden Noppen (26) aufweisen, die in entsprechende Vertiefungen (27) der Leiterplatte eingreifen.

**FIG 1**

**FIG 2**

LCD-DISPLAY 123
KLAPPBAR 456?

**FIG 3**

# FIG 4

# FIG 5

# FIG 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 190 646 (ITALORA)<br>* Seite 1, Zeilen 3-11; Seite 13, Zeile 20 - Seite 14, Zeile 14; Figuren 15,17 *<br>--- | 1 | H 04 M 1/02<br>G 09 F 9/00 |
| X | PATENT ABSTRACTS OF JAPAN, Band 9, Nr. 76 (P-346)[1799], 5. April 1985; & JP - A - 59 208 528 (SUWA SEIKOSHA) 26.11.1984<br>--- | 1 | |
| X | EP-A-0 149 762 (INT. STANDARD ELECTRIC CORP.)<br>* Zusammenfassung; Seite 3, Zeilen 23-28; Figuren 3,4 *<br>--- | 1 | |
| A | US-A-4 596 923 (KUO)<br>* Zusammenfassung; Spalte 1, Zeilen 44-50; Figuren 1,2 *<br>--- | 1,2 | |
| A | GB-A-2 152 761 (CITIZEN WATCH)<br>* Seite 1, Zeilen 70-79; Figur 2 *<br>----- | 1 | |

RECHERCHIERTE SACHGEBIETE (Int. Cl.4)

H 04 M
G 02 F
G 04 C
G 04 G
G 06 F
G 01 R
G 12 B
H 05 K

Der vorliegende Recherchenbericht wurde für alle Patentansprüche erstellt

| Recherchenort | Abschlußdatum der Recherche | Prüfer |
|---|---|---|
| BERLIN | 25-11-1987 | BEITNER M.J.J.B. |